# EUROPEAN PATENT APPLICATION

(11) **EP 2 278 786 A1**
(43) Date of publication of application: **26.01.2011**
(21) Application number: 10251286.0
(22) Date of filing: 19.07.2010
(51) Int. Cl.: H04N 1/00, G03G 15/00, G06F 1/32, G06F 21/00, H02J 13/00

(54) **Power supply device and image forming apparatus having power supply device**

(30) Priority: 24.07.2009 JP 2009172967; 30.06.2010 JP 2010150074
(71) Applicant: Ricoh Company Ltd., Tokyo 143-8555 (JP)
(72) Inventor: Yamamoto, Mitsufumi, Tokyo 143-8555 (JP)
(74) Representative: White, Duncan Rohan

(57) **Abstract**

Disclosed is a power supply device (80) that includes a controller (108) that performs a shutdown sequence; a first power supply unit (104) that generates first power and second power; a power-supply switch unit (106) that turns on or turns off a supply of the first power to the controller (108); a switch unit (114) that turns on or turns off a supply of the second power to the controller (108); a determination unit (1082) that determines whether the shutdown sequence is completed; and a signal transmission unit (1084) that transmits a switch-OFF signal to the switch unit (114) for turning off the supply of the second power to the controller (108) when the power-supply switch unit (106) turns off the supply of the first power to the controller (108) and the determination unit (1082) determines that the shutdown sequence is completed.

## Description

### BACKGROUND OF THE INVENTION

### 1. Field of the Invention

The present invention relates to a power supply device that supplies power to the respective units of electronic equipment and an image forming apparatus having the power supply device.

### 2. Description of the Related Art

Up until now, power supply devices have been used for various electronic apparatuses. For example, in an image forming apparatus having a power supply device mounted as shown in Patent Document 1, a controller (control unit) completely turns off the power supply of the whole image forming apparatus after storing data to be protected such as image data in a HDD.

In the power supply device of Patent Document 1, when a user turns off a power supply switch, the DC power supplied to the controller stops after the lapse of a retention time of a capacitor. This retention time is determined based on the capacitance of the capacitor, and becomes shorter as the capacitance of the capacitor is smaller. Accordingly, if the capacitance of the capacitor is small and the retention time is short, the supply of the DC power to the controller stops immediately when the user turns off the power supply switch. As a result, the controller stops immediately. Thus, in a case where the capacitance of the capacitor is small, if the user suddenly turns off the power supply switch of the image forming apparatus (e.g., while the controller is storing data to be protected in the HDD), the controller would stop immediately. Therefore, the power supply of the image forming apparatus is turned off before the controller stores all the data to be protected in the HDD. In this case, the data to be protected may not be properly protected. In addition, if the capacitance of the capacitor becomes larger and the retention time becomes longer, the controller would waste power.

Patent Document 1: JP-A-2002-312075

### SUMMARY OF THE INVENTION

The present invention may provide a power supply device that properly protects data to be protected even if a user suddenly turns off a power supply switch, and also provide an image forming apparatus having the power supply device.

According to an aspect of the present invention, there is provided a power supply device including a controller that performs a shutdown sequence; a first power supply unit that generates first power and second power; a power-supply switch unit that turns on or turns off a supply of the first power to the controller; a switch unit that turns on or turns off a supply of the second power to the controller; a determination unit that determines whether the shutdown sequence is completed; and a signal transmission unit that transmits a switch-OFF signal to the switch unit for turning off the supply of the second power to the controller when the power-supply switch unit turns off the supply of the first power to the controller and the determination unit determines that the shutdown sequence is completed.

A power supply device and an image forming apparatus having the power supply device according to embodiments of the present invention can properly protect data to be protected even if a user suddenly turns off a power supply switch.

Other objects, features and advantages of the present invention will become more apparent from the following detailed description when read in conjunction with the accompanying drawings.

### BRIEF DESCRIPTION OF THE DRAWINGS

FIG. 1 is a diagram showing the appearance of an example of an image forming apparatus according to embodiments of the present invention;
FIG. 2 is a block diagram showing a functional configuration example of a power supply device according to a first embodiment of the present invention;
FIG. 3 is a flowchart showing a processing flow when the power supply device is switched to a complete-ON mode according to the first embodiment of the present invention;
FIG. 4 is a flowchart showing a processing flow when the power supply device is switched to a complete-OFF mode according to the first embodiment of the present invention;
FIG. 5 is a block diagram showing a functional configuration example of the power supply device according to a second embodiment of the present invention;
FIG. 6 is a flowchart showing a processing flow when the power supply device is switched to the complete-ON mode according to the second embodiment of the present invention; and
FIG. 7 is a flowchart showing a processing flow when the power supply device is switched to the complete-OFF mode according to the second embodiment of the present invention.

### DETAILED DESCRIPTION OF THE PREFERRED EMBODIMENTS

Embodiments of the present invention are described below with reference to the accompanying drawings. Note that constituent units having the same function and processes that perform the same processing are denoted by the same reference numerals, and their duplicated descriptions are omitted. Further, in the following description, AC refers to alternating current, and DC refers to direct current.

### (First Embodiment)

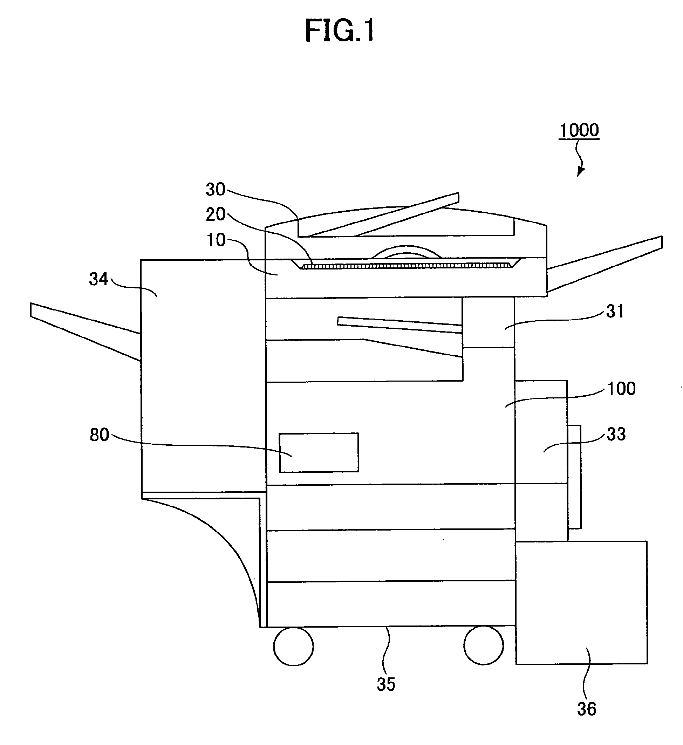

FIG. 1 is a schematic diagram showing the appearance of an image forming apparatus 1000 having a power supply device 80 according to this embodiment. This image forming apparatus is mainly configured with an ADF (Automatic Document Feeder) 30, an operations unit 20, a scanner 10, a color printer 100, a finisher 34 equipped with a shift tray that is capable of holding a stapler and a large amount of sheets on which an image is formed, a both-sides inversion unit 33, a sheet feeding bank 35, a large-capacity sheet feeding tray 36, and a sheet discharging tray 31.

The ADF 30 automatically feeds a document into the image forming apparatus 1000. A user inputs, for example, an image forming instruction to the operations unit 20. The operations unit 20 has a DC-power-supply switch unit 106 described below. The user turns off the DC-power-supply switch unit 106 when he/she wants to turn off the image forming apparatus. The scanner 10 scans a document. The color printer 100 forms the image of a document on a transfer sheet. The both-sides inversion unit 33 inverts a document to form the both-sides image of a document. The power supply device 80, which supplies power to the respective units of the image forming apparatus 1000, is arranged at a predetermined position.

Next, the power supply device 80 according to the first embodiment is described. Although the power supply device 80 is mounted on the image forming apparatus, it may be mounted on other electronic equipment.

In the following description, the control of the power supply device 80 is roughly divided into a complete-ON mode, a complete-OFF mode, and an energy-saving mode. The energy-saving mode is described in a second embodiment. The complete-ON mode refers to a state in which the electronic apparatus (for example, image forming apparatus) having the power supply device 80 mounted thereon operates. The complete-OFF mode refers to a state in which power is not supplied to the respective units of the electronic apparatus. The energy-saving mode refers to a state in which the processing of the electronic apparatus is stopped but capable of being started immediately.

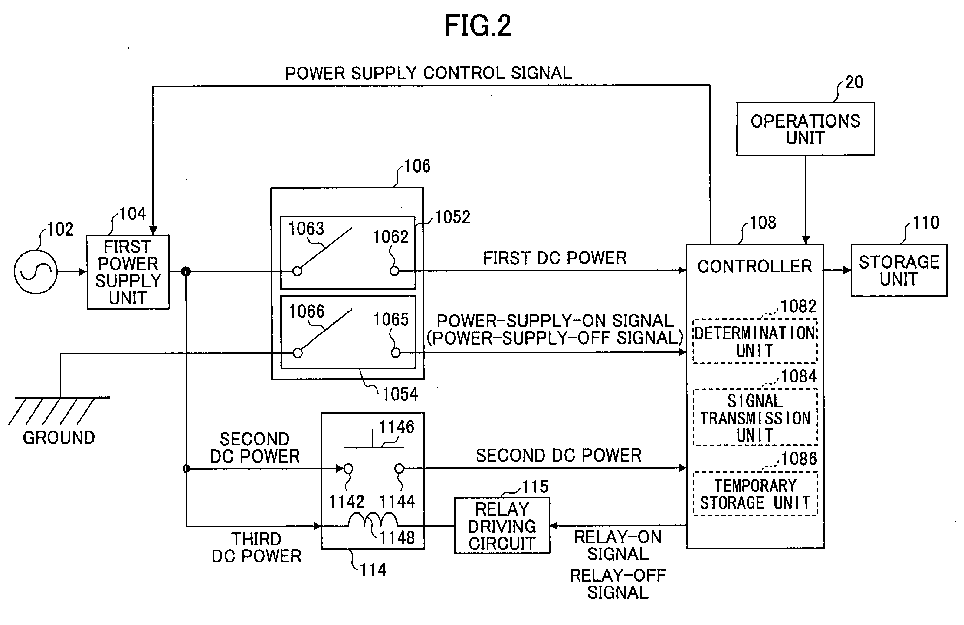

FIG. 2 is a diagram showing a functional configuration example of the power supply device 80. The power supply device 80 according to the first embodiment has an AC power supply 102, a first power supply unit 104, a power-supply switch unit 106, a controller 108, an operations unit 20, and a switch unit 114. A storage unit 110 is attached to the power supply device 80. Further, in this embodiment, the power-supply switch unit 106 is described as the DC-power-supply switch unit 106 that turns on or turns off the supply of direct current power. The AC power supply 102 supplies the alternating current of a commercial power supply. Further, the switch unit 114 is, for example, a relay. In the following description, the switch unit 114 is referred to as a relay unit 114. Further, a relay-ON signal and a relay-OFF signal refer to a switch-ON signal and a switch-OFF signal, respectively.

Further, in the example of FIG. 2, the DC-power-supply switch unit 106 and the relay unit 114 are arranged between the first power supply unit 104 and the controller 108. Further, the first power supply unit 104 is arranged between the AC power supply 102 and the DC-power-supply switch 106.

The first power supply unit 104 converts AC (Alternating Current) power from the AC power supply into DC (Direct Current) power, and supplies the power thus converted to the respective units of the power supply device 80 or the image forming apparatus. Further, part of the AC power from the AC power supply 102 is subjected to predetermined filtering and then supplied to a fixation heater (not shown).

The first power supply unit 104 generates first power, second power, and third power. In the following description, although the first power, the second power, and the third power are described as first DC power, second DC power, and third DC power, respectively, they may be AC power. Each of the first DC power, the second DC power, and the third DC power is DC power. The DC-power-supply switch unit 106 switches ON/OFF for supplying the first DC power.

The first DC power is the DC power supplied in the order from the first power supply unit 104 to the controller 108 through the power supply switch unit 1052 that has been turned on.

The second DC power is the DC power supplied in the order from the first power supply unit 104 to the controller 108 through the relay unit 114 that has been turned on.

The third DC power is the DC power for operating the relay unit 114. Here, the operation of the relay unit 114 is such that the relay unit 114 is capable of being turned ON and OFF.

The controller 108 operates with at least one of the first DC power and the second DC power. Further, the controller 108 drives all driving units such as the conveyance belt of the image forming apparatus (not shown).

The DC-power-supply switch unit 106 has the first switch unit 1052 and a second switch unit 1054. The first switch unit 1052 has a first movable end 1063 and a first fixed end 1062. The second switch unit 1054 has a second movable end 1066 and a second fixed end 1065. A wiring on the side of the first movable end 1063 is connected to the first power supply unit 104. A wiring on the side of the first fixed end 1062 is connected to the controller 108. A wiring on the side of the second movable end 1066 is grounded. A wiring on the side of the second fixed end 1065 is connected to the controller 108.

When the user turns on the DC-power-supply switch unit 106, the first movable end 1063 contacts the first fixed end 1062 while the second movable end 1066 contacts the second fixed end 1065. Thus, the first DC power from the first power supply unit 104 is supplied to the controller 108 (supply of the power is turned on).

Further, when the user turns off the DC-power-supply switch unit 106, the contact of the movable end 1063 with the fixed end 1062 is released and the contact of the movable end 1066 with the fixed end 1065 is released. Thus, the first DC power from the first power supply unit 104 is no longer supplied to the controller 108 (supply of the power is turned off).

Further, the relay unit 114 has one movable section 1146, two fixed ends 1142 and 1144, and a coil 1148. A wiring on the side of the fixed end 1144 is connected to the controller 108, while a wiring on the side of the fixed end 1142 is connected to the first power supply unit 104. When the user turns on the relay unit 114, the two ends of the movable section 1146 contact the corresponding two fixed ends 1142 and 1144. Thus, the second DC power from the first power supply unit 104 is supplied to the controller 108 (supply of the power is turned on).

Further, when the user turns off the relay unit 114, the contact of the two ends of the movable section 1146 with the two fixed ends 1142 and 1144 is released. Thus, the second DC power from the first power supply unit 104 is no longer supplied to the controller 108 (supply of the power is turned off).

The storage unit 110 is, for example, a HDD (Hard Disk Drive), where data to be protected are stored. Here, the data to be protected refer to data to be processed by the image forming apparatus, and include image data to be formed into images by the image forming apparatus 1000, address data such as FAX numbers of other terminals, sending/receiving history information and system information on other terminals, and the like.

The controller 108 controls the respective units of the power supply device 80, and also performs a shutdown sequence. Further, the controller 108 has a determination unit 1082, a signal transmission unit 1084, and a temporary storage unit 1086. The determination unit 1082 determines whether the shutdown sequence by the controller 108 has been completed.

The signal transmission unit 1084 generates and transmits the relay-ON signal and the relay-OFF signal. The relay-ON signal and the relay-OFF signal are signals for turning on and off the relay unit 114, respectively. The temporary storage unit 1086 temporarily stores the data to be protected before being stored in the storage unit 110. In the example of FIG. 2, although the determination unit 1082, the signal transmission unit 1084, and the temporary storage unit 1086 are provided inside the controller 108, they may be provided outside the controller 108.

Here, the shutdown sequence is described. The shutdown sequence has the following processing steps (1) through (4).
(1) The controller 108 prevents the storage of the data to be protected in the storage unit 110 (HDD) and a flash memory (such as a USB and a SD card).
(2) The controller 108 temporarily writes the data to be protected into other memories (for example, the temporary storage unit 1086).
(3) Then, the controller 108 writes the data to be protected, which have been written into the other memories, into the storage unit 110 and/or the flash memory. When the data to be protected are stored in the storage unit 110, the storage unit 110 transmits a storage completion signal, which indicates the completion of storing the data to be protected, to the controller 108. Note that in this embodiment, the controller 108 does not write the data to be protected into the flash memory.
(4) When the transmission and reception of the data between the controller 108 and the storage unit 110 is completed, the controller 108 disables writing into the storage unit 110. Here, the "transmission and reception of the data between the controller 108 and the storage unit 110" refers to "the transmission of the data to be protected from the controller 108 to the storage unit 110 and the reception of the storage completion signal from the storage unit 110 by the controller 108." Further, the "disabling writing into the storage unit" refers to, for example, retraction of the head of the storage unit 110 (HDD).

Further, the controller 108 is configured not to detect various errors when completing the shutdown sequence. This is because the image forming apparatus 1000 would start with the indication of errors at its start-up even if the image forming apparatus 100 shut down in a normal state in the previous time.

Further, the power-supply-ON signal and the power-supply-OFF signal shown in FIG. 2 are generated by the DC-power-supply switch unit 106, which indicate the ON/OFF state of the DC-power-supply switch unit 106.

During the complete-ON mode, the controller 108 transmits the power supply control signal to the first power supply unit 104 to supply the first DC power, the second DC power, and the third DC power.

### (Complete-ON mode)

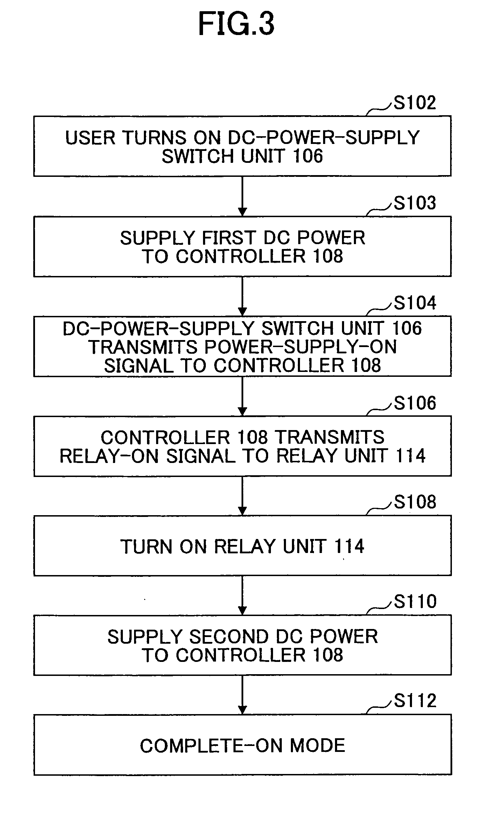

First, the complete-ON mode is described. FIG. 3 is a flowchart showing a processing flow when the power supply device 80 is switched from the complete-OFF mode to the complete-ON mode. The user turns on the DC-power-supply switch unit 106 (in step S102). In other words, the movable end 1063 of the first switch unit 1052 contacts the fixed end 1062, and the movable end 1066 of the second switch unit 1054 contacts the fixed end 1065. Then, the first DC power (5 V) from the first power supply unit 104 is supplied to the controller 108 (in step S103). Since the first DC power is supplied to the controller 108 and the wiring on the side of the second movable end 1066 is grounded, the power-supply-ON signal is transmitted to the controller 108 (in step S104). As described above, the power-supply-ON signal refers to a signal indicating that the user has turned on the DC-power-supply switch unit 106. With the reception of the power-supply-ON signal, the controller 108 recognizes that the user has turned on the DC-power-supply switch unit 106.

Further, instead of providing the second switch unit 1054 in the DC-power-supply switch unit 106, a power-supply-ON signal generation unit (not shown) may generate the power-supply-ON signal and transmit the same to the controller 108 when the DC-power-supply switch unit 106 detects that the first movable end 1063 has contacted the first fixed end 1062. Further, instead of providing the second switch unit 1054 in the DC-power-supply switch unit 106, the controller 108 may recognize that the user has turned on the DC-power-supply switch unit 106 when confirming the supply of the first DC power from the DC-power-supply switch unit 106.

When the controller 108 recognizes that the user has turned on the DC-power-supply switch unit 106 with, for example, the reception of the power-supply-ON signal, the signal transmission unit 1084 of the controller 108 generates the relay-ON signal and transmits the same to the relay unit 114 (in step S106). As described above, the relay-ON signal refers to a signal for turning on the relay unit 114. More specifically, when the relay-ON signal is transmitted to a relay driving circuit 115, the relay driving circuit 115 causes the coil 1148 to supply the third DC power to the relay unit 114. With the third DC power, the relay unit 114 is turned on.

With the reception of the relay-ON signal, the relay unit 114 is turned on (in step S108). Then, the first power supply unit 104 supplies the second DC power to the controller 108 via the relay unit 114 (in step S110). The relay unit 114 serves as a bypass of the DC-power-supply switch unit 106. When the first DC power and the second DC power are supplied to the controller 108 in the manner described above, the power supply device 80 and the image forming apparatus 1000 are switched to the complete-ON mode as a whole (in step S112).

### (Complete-OFF mode)

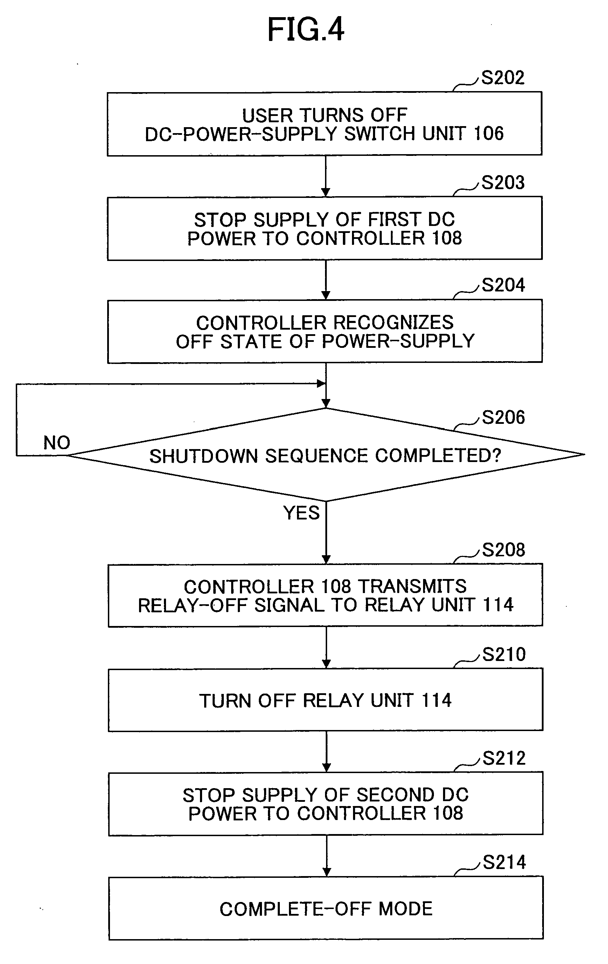

Next, the complete-OFF mode is described. The power supply device 80 according to the first embodiment produces an effect when being switched from the complete-ON mode to the complete-OFF mode. FIG. 4 is a flowchart showing a processing flow when the power supply device 80 is switched from the complete-ON mode to the complete-OFF mode. In the following description, FIGS. 2 and 4 are used.

When the user turns off the DC-power-supply switch 106 (in step S202), the contact of the first movable end 1063 with the first fixed end 1062 is released, which in turn stops the supply of the first DC power from the first power supply unit 104 to the controller 108 (in step S203). While the supply of the first DC power to the controller 108 is stopped, the contact of the second movable end 1066 with the second fixed end 1065 is released. Therefore, the connection between the ground and the controller 108 is interrupted, so that the power-supply-ON signal is no longer transmitted to the controller 108. With no reception of the power-supply-ON signal, the controller 108 recognizes that the user has turned off the DC-power-supply switch 106 (in step S204).

Further, instead of providing the second switch unit 1054 in the DC-power-supply switch unit 106, a signal generation unit (not shown) may generate the power-supply-OFF signal and transmit the same to the controller 108 when the DC-power-supply switch unit 106 detects that the contact of the first movable end 1063 with the first fixed end 1062 has been released. As described above, the power-supply-OFF signal refers to a signal for indicating that the user has turned off the DC-power-supply switch unit 106. With the reception of the power-supply-OFF signal, the controller 108 recognizes that the user has turned off the DC-power-supply switch unit 106. Further, instead of providing the second switch unit 1054 in the DC-power-supply switch unit 106, the controller 108 may recognize that the user has turned off the DC-power-supply switch unit 106 when confirming no supply of the first DC power from the DC-power-supply switch unit 106.

With the reception of the power-supply-OFF signal by the controller 108, the determination unit 1082 determines whether the shutdown sequence has been completed (in step S206). The processing flow does not advance to the next step (step S208) until the shutdown sequence is completed, i.e., until the above processing steps (1) through (4) are completed. This is because, if the processing flow advances to the next step without completing the whole shutdown sequence, the power supply device 80 may be switched to the complete-OFF mode during the storage of the data to be protected. This could result not only in the loss of the data to be protected but also in the breakage of the storage unit 110.

When it is determined by the determination unit 1082 that the "shutdown sequence has been completed" (Yes in step S208), the processing flow advances to the next processing step S208. Further, when it is determined by the determination unit 1082 that the "shutdown sequence has been completed," log information indicating that the data to be protected have been stored in the storage unit 110 may be generated.

In step S208, the signal transmission unit 1084 of the controller 108 generates the relay-OFF signal for turning off the relay unit 114 and transmits the same to the relay unit 114. As described above, the relay-OFF signal refers to a signal for turning off the relay unit 114. With the reception of the relay-OFF signal, the relay unit 114 is turned off (in step S210). That is, the contact of the movable section 1146 of the relay unit 114 with the two fixed ends 1142 and 1144 is released. Thus, the supply of the second DC power to the controller 108 is stopped (in step S212). Accordingly, the first DC power and the second DC power are no longer supplied to the controller 108, and the power supply control signal from the controller 108 is no longer transmitted to the first power supply unit 104. As a result, the power supply from the first power supply unit 104 is stopped, whereby the whole power supply device 80 is switched to the complete-OFF mode (in step S214).

Further, in FIG. 4, the processing in step S206 is performed after the processing in steps S203 and S204. However, the processing in steps S203 and S204 may be performed after the processing in step S206, or the processing in steps S203 and S204 may be performed simultaneously with the processing in step S206. That is, when the DC-power-supply switch unit 106 turns off the supply of the first power to the controller 108 and the determination unit 1082 determines that the shutdown sequence has been completed, the signal transmission unit 1084 transmits the switch-OFF signal for turning off the supply of the second power to the controller 108 to the switch unit 114.

As is evident from steps S206, S208, and S210 in FIG. 4, the power supply device 80 according to the first embodiment is switched to the complete-OFF mode after it is determined by the determination unit 1082 of the controller 108 that the shutdown sequence has been completed and then the relay unit 114 is turned off. Accordingly, the power supply device 80 can properly protect the data to be protected and the storage unit 110.

### (Second Embodiment)

A power supply device 200 according to a second embodiment also gives consideration to the energy-saving mode, and can enormously reduce power consumption when being switched to the energy-saving mode. In a case where the DC-power-supply switch unit 106 is turned on and the user selects the energy-saving mode using a soft switcher 124 described below, the power supply device 200 is switched from the complete-ON mode to the energy-saving mode when the controller 108 performs the shutdown sequence. In addition, in a case where the DC-power-supply switch unit 106 is turned on and the image forming apparatus is not used for a predetermined time, the power supply device 200 may be automatically switched to the energy-saving mode.

In the energy-saving mode, the DC-power-supply switch unit 106 is turned on. Therefore, the first DC power is supplied to the controller 108. Accordingly, if the power supply device 200 is switched from the energy-saving mode to the complete-ON mode, the controller 108 can immediately start up.

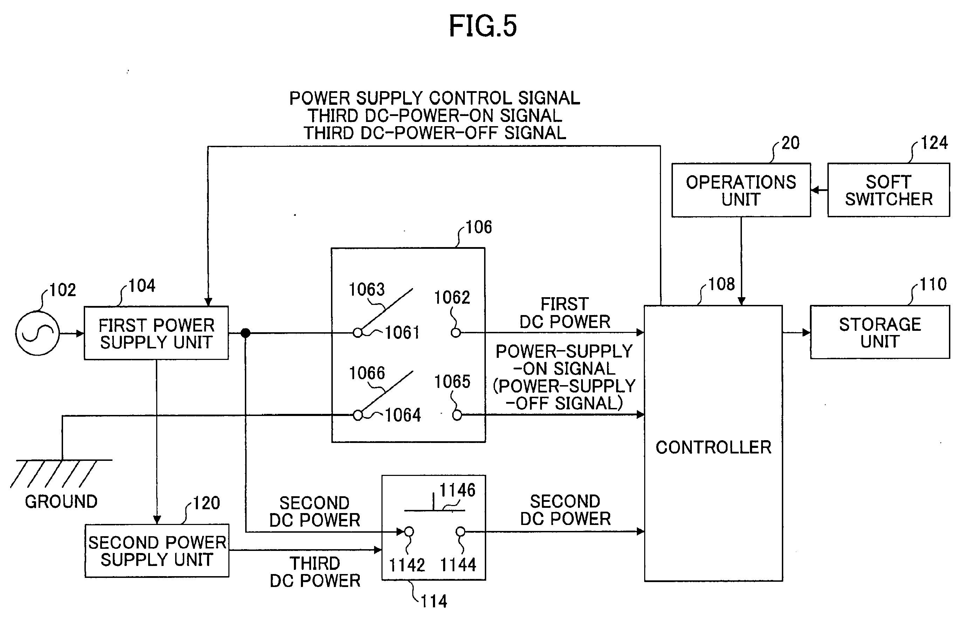

FIG. 5 is a diagram showing a functional configuration example of the power supply device 200. The power supply device 200 is different from the power supply device 80 in that it also has a second power supply unit 120 and the soft switcher 124. Further, according to the first embodiment, the third DC power is supplied from the first power supply unit 104. However, according to the second embodiment, the third DC power is supplied from the second power supply unit 120. The second power supply unit 120 is either connected to the first power supply unit 104 or arranged inside the first power supply unit 104.

The soft switcher outputs a control signal indicating that the user has selected the energy-saving mode as described above.

### (Complete-ON mode)

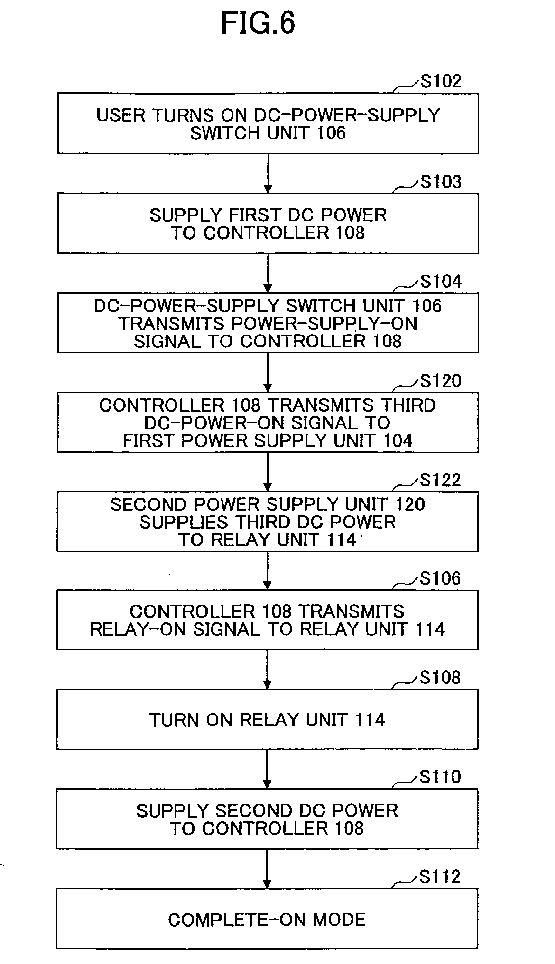

FIG. 6 is a flowchart showing a processing flow when the power supply device 200 according to the second embodiment is switched from the complete-OFF mode to the complete-ON mode. The processing flow of FIG. 6 is different from the processing flow of FIG. 3 in that it has steps S120 and S122 between steps S104 and S106.

With the reception of the power-supply-ON signal from the DC-power-supply switch unit 106 in step S104, the controller 108 transmits a third DC-power-ON signal to the first power supply unit 104 (in step S120). Then, the first power supply unit 104 causes the second power supply unit 120 to supply the third DC power to the relay unit 114 (in step S122). The third DC power is the one supplied from the first power supply unit 104 to the second power supply unit 120. Further, in the example of FIG. 5, although the first power supply unit 104 and the second power supply unit 120 are separately provided, they may be integrated with each other. Further, the third DC-power-ON signal is a signal for causing the first power supply unit 104 to supply the third DC power to the second power supply unit 120. Since the subsequent processing steps are the same as those in the first embodiment, their descriptions are omitted. With the reception of the third DC power and the relay-ON signal, the relay unit 114 is turned on. Further, the relay unit 114 is turned off (1) when the supply of the third DC power to the relay unit 114 is stopped or (2) when the relay unit 114 receives the third DC power and the relay-OFF signal.

Then, the processing in steps S106 through S112 are performed.

### (Energy-Saving Mode)

Next, the energy-saving mode is described. In the energy-saving mode, the controller 108 transmits the third DC-power-OFF signal to the first power supply unit 104. With the reception of the third DC-power-OFF signal, the first power supply unit 104 causes the second power supply unit 120 to stop the supply of the third DC power to the relay unit 114. The third DC-power-OFF signal is a signal for stopping the supply of the third DC power to the relay unit 114. That is, in the power supply device 200, the third DC power is supplied to the relay unit 114 in the complete-ON mode but not supplied to it in the energy-saving mode.

When the supply of the third DC power to the relay unit 114 is stopped, the relay 114 is turned off as described above. When the relay unit 114 is turned off, the second DC power is no longer supplied to the controller 108. Meanwhile, since the DC-power-supply switch unit 106 is turned on, the first DC power continues to be supplied to the controller 108. The energy-saving mode refers to a state in which the first DC power is supplied to the controller 108 but the second DC power is not supplied to it. The controller 108 operates with the first DC power.

Accordingly, the determination unit 1082 of the controller 108 can determine whether the shutdown sequence has been completed even in the energy-saving mode. In other words, the power supply device 200 can perform the processing shown in FIG. 4 even if it is switched from the energy-saving mode to the complete-OFF mode. In this case, however, the processing steps S208 through S212 of FIG. 4 are omitted. Accordingly, the power supply device 200 can be switched to the complete-OFF mode after properly completing the shutdown sequence.

Further, when being switched to the energy-saving mode, the second power supply unit 120 may voluntarily stop the supply of the third DC power to the relay unit 114 without being controlled by the first power supply unit 104.

As described above, the relay unit 114 of the power supply device 200 according to the second embodiment operates with the third DC power, but the third DC power is not supplied to the relay unit 114 in the energy-saving mode due to the control of the controller 108. Accordingly, the power supply device 200 according to the second embodiment can enormously reduce a power consumption amount.

### (Complete-OFF mode)

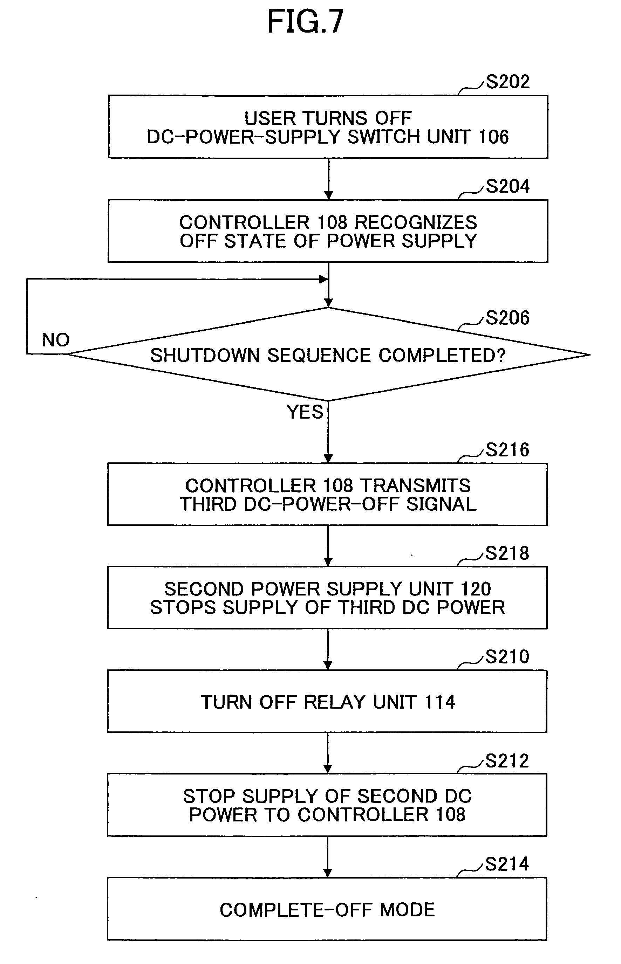

A method for switching the power supply device 80 from the complete-ON mode to the complete-OFF mode described in the first embodiment is called a first complete-OFF mode switch method. In the first complete-OFF mode switch method, the relay unit 114 is turned off with the reception of the relay-OFF signal so as to switch the power supply device 80 to the complete-OFF mode. According to the second embodiment, it is also possible to switch the power supply device 200 to the complete-OFF mode with the first complete-OFF mode switch method. However, in the following description, a second complete-OFF mode switch method different from the first complete-OFF mode switch method is used. FIG. 7 is a flowchart showing a processing flow when the second complete-OFF mode switch method is used. The processing flow of FIG. 7 is different from the processing flow of FIG. 4 in that step S208 is replaced by steps S216 and S218.

In step S202, the DC-power-supply switch unit 106 is turned off, which in turn stops the supply of the first DC power to the controller 108 (in step S203). However, since the relay unit 114 is turned on, the second DC power is still supplied to the controller 108. Accordingly, the determination unit 1082, the signal transmission unit 1084, and the temporary storage unit 1088 of the controller 108 normally perform their processing.

When it is determined by the determination unit 1082 that the shutdown sequence has been completed in step S206, the controller 108 transmits the third DC-power-OFF signal to the first power supply unit 104 (in step S216). With the reception of the third DC-power-OFF signal, the first power supply unit 104 causes the second power supply unit 120 to stop the supply of the third DC power to the relay unit 114 (in step S218). Then, the third DC power is no longer supplied to the relay unit 114, so that the relay unit 114 is turned off (in step S210). Thus, the supply of the second DC power to the controller 108 is stopped (in step S212), which in turn switches the power supply device 200 to the complete-OFF mode (in step S214).

This second complete-OFF mode switch method can eliminate the relay driving circuit 115 (the transmission path for the relay-ON signal and the relay-OFF signal) from the controller 108 to the relay unit 114.

The second power supply unit 120 of the power supply device 200 according to the second embodiment supplies the third DC power to the relay unit 114 in the complete-ON mode but does not supply the third DC power to it in the energy-saving mode and the complete-OFF mode. Accordingly, since the third DC power is not supplied to the relay unit 114 in the energy-saving mode, it is expected that the power supply device 200 can further save power in the energy-saving mode.

### (Other)

Note that the power supply device described in Patent Document 1 requires the separation of an AC power supply switch that operates with AC from a constituent unit that operates with DC in terms of safety. Further, a relay that operates with AC is large, which results in an increase in the size of the whole power supply device. Further, the relay that operates with AC is expensive, which results in an increase in the manufacturing costs of the whole power supply device.

Therefore, as described above, the power supply device according to the embodiments of the present invention is preferable in that the power-supply switch unit 106 turns on or turns off the supply of the first DC power, the second DC power, and the third DC power, and the relay unit 114 operates with DC. If the power-supply switch unit 106 turns on or turns off the supply of the DC power and the relay unit 114 operates with DC, it is not necessary to separate the power-supply switch unit 106, the constituent units that operate with DC, and the relay unit 114 from one another. In addition, the power supply device according to the embodiments of the present invention can be reduced in size and manufacturing costs because it uses the relay unit that operates with DC. Accordingly, the problems in the power supply device of the related art can be addressed.

Further, the power supply device of the related art described in Patent Document 1 cannot use third DC current (DC power that is not supplied in the energy-saving mode as described above). This is because the AC power supply switch of the related art described in Patent Document 1 operates with AC and thus cannot supply the third DC current as DC.

The present invention is not limited to the specifically disclosed embodiments, and variations and modifications may be made without departing from the scope of the present invention.

## Claims

1. A power supply device comprising:
a controller that performs a shutdown sequence;
a first power supply unit that generates first power and second power;
a power-supply switch unit that turns on or turns off a supply of the first power to the controller;
a switch unit that turns on or turns off a supply of the second power to the controller;
a determination unit that determines whether the shutdown sequence is completed; and
a signal transmission unit that transmits a switch-OFF signal to the switch unit for turning off the supply of the second power to the controller when the power-supply switch unit turns off the supply of the first power to the controller and the determination unit determines that the shutdown sequence is completed.

2. The power supply device according to claim 1, further comprising:
a second power supply unit that supplies third power for operating the switch unit to the switch unit and stops a supply of the third power to the switch unit in an energy-saving mode.

3. A power supply device comprising:
a controller that performs a shutdown sequence;
a first power supply unit that generates first power, second power, and third power;
a power-supply switch unit that turns on or turns off a supply of the first power to the controller;
a switch unit that operates with the third power and turns on or turns off a supply of the second power to the controller;
a second power supply unit that supplies the third power to the switch unit and stops a supply of the third power to the switch unit in an energy-saving mode; and
a determination unit that determines whether the shutdown sequence is completed; wherein
the controller causes the second power supply unit to stop the supply of the third power when the power-supply switch unit turns off the supply of the first power to the controller and the determination unit determines that the shutdown sequence is completed.

4. An image forming apparatus comprising the power supply device according to any one of claims 1 through 3.
